# EUROPÄISCHE PATENTSCHRIFT

(11) **EP 1 250 375 B1**
(45) Veröffentlichungstag und Bekanntmachung des Hinweises auf die Patenterteilung: **25.01.2006**
(21) Anmeldenummer: 01909577.7
(22) Anmeldetag: 03.01.2001
(51) Int. Cl.: C08G 64/06, G11B 7/24

(54) **POLYCARBONAT-SUBSTRATE**
POLYCARBONATE SUBSTRATES
SUBSTRATS EN POLYCARBONATE

(30) Priorität: 13.01.2000 DE 10001036
(43) Veröffentlichungstag der Anmeldung: 23.10.2002
(73) Patentinhaber: Bayer MaterialScience AG, 51368 Leverkusen (DE); BAYER ANTWERPEN N.V., 2040 Antwerpen (BE)
(72) Erfinder: VAN OSSELAER, Tony, 47800 Krefeld (DE); KÜHLING, Steffen, 40670 Meerbusch (DE); VIROUX, Paul, B-2540 Hove (BE); PLOMPEN, Hugo, B-2940 Stabroek (BE); VANSANT, Richard, B-2531 Vremde (BE)
(86) Internationale Anmeldenummer: PCT/EP2001/000014
(87) Internationale Veröffentlichungsnummer: WO 2001/051541

(56) Entgegenhaltungen:
- EP-A- 0 691 361
- DATABASE WPI Section Ch, Week 199935 Derwent Publications Ltd., London, GB; Class A23, AN 1999-412383 XP002168866 & JP 11 165342 A (TEIJIN KASEI LTD), 22. Juni 1999 (1999-06-22)
- DATABASE WPI Section Ch, Week 199737 Derwent Publications Ltd., London, GB; Class A23, AN 1997-399751 XP002168867 & JP 09 176477 A (TEIJIN KASEI LTD), 8. Juli 1997 (1997-07-08)

## Beschreibung

Die Anmeldung betrifft ein Verfahren zur Herstellung von Polycarbonate in hoher Reinheit und extrem hoher Transmission besonders bei kurzwelligen Wellenlängen auf Basis von 1,1-Bis-(4-hydroxyphenyl)-3,3,5-trimethylcyclohexanon sowie 4,4-(meta-Phenylendiisopropyl)-diphenol sowie das so erhaltene Polycarbonat dessen Verwendung zur Herstellung von optischen Datenspeichern sowie derart hergestelte optische Datenspeicher.

Für optische Datenträger wird hochreines Polycarbonat benötigt, da sich das Polycarbonat im optischen Strahlengang des Lasers befindet und die im Polycarbonat gespeicherten Informationsstrukturen Größenordnungen im Mikrometerbereich oder Submikrometerbereich aufweisen. Weiterhin geht die Entwicklung dahin, die Informationsstrukturen noch weiter zu verfeinern - somit mehr Informationsdichte zu erzeugen - und dann Laser kürzerer Wellenlänge zu verwenden, z.B. solche, die blaues Licht (< 420nm) emittieren. Es bestand daher die Aufgabe, Datenträger bzw. Verfahren zu ihrer Herstellung zu entwickeln, welche eine höhere Transmission im kurzwelligen Lichtbereich aufweisen.

Eine weitere Voraussetzung, um hohe Speicherdichten zu erzielen ist, dass das verwendete Polycarbonat einen niedrigen Brechungsindex besitzt. Ein solches Polycarbonat ist in der EP-A-691 361 vorbeschrieben. Hier wird auch auf die Bedeutung einer hohen Lichttransmission im Polycarbonat hingewiesen. Diese wird jedoch lediglich als integrierte Größe über den gesamten Wellenlängenberich mit > 85% angegeben. Diese integrierte Größe sagt jedoch nichts über die Transmission im bedeutsamen Kurzwellenbereich (390 nm bis 450 nm) aus.

Polycarbonate werden im allgemeinen nach dem sogenannten Phasengrenzflächenverfahren hergestellt, dabei werden Dihydroxydiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion wird die wäßrige Phase in der organischen Phase emulgiert. Dabei entstehen Tröpfchen unterschiedlicher Größe. Nach der Reaktion wird die organische, das Polycarbonat enthaltende Phase, üblicherweise mehrmals mit einer wäßrigen Flüssigkeit gewaschen und nach jedem Waschvorgang von der wäßrigen Phase soweit wie möglich getrennt.

Als Waschflüssigkeiten werden wäßrige Flüssigkeiten zur Abtrennung des Katalysators, wie verdünnte Mineralsäure, insbesondere HCl oder H₃PO₄ wobei die Konzentration von HCl oder H₃PO₄ in der Waschflüssigkeit beispielsweise 0,5 bis 1,0 Gew.% betragen, und zur weiteren Reinigung vollentsalztes, feinstfiltrietes, metallarmes Wasser eingesetzt.

Als Phasentrennvorrichtungen zur Abtrennung der Waschflüssigkeit von der organischen Phase werden an sich bekannte Trenngefäße, Phasenseparatoren, Zentrifugen oder Coalescer oder auch Kombinationen dieser Einrichtungen eingesetzt.

Hierbei wird das Polycarbonat im allgemeinen durch Abdampfen des Lösungsmittels bei ermäßigten Druck und erhöhter Temperatur, oder durch Sprühtrocknung entfernt. Das Polycarbonat fällt dann als Pulver an. Das Polycarbonat kann auch durch Fällung aus der organischen Lösung und anschließender Resttrocknung erhalten werden. Eine andere Möglichkeit zur Verdampfung und Entfernung des (Rest)Lösungsmittels ist die Extrusion. Wiederum eine andere Technologie stellt die Strangverdampfertechnologie dar.

Die Aufgabe der vorliegenden Erfindung ist die Bereitstellung eines verbesserten Verfahrens zur Herstellung von reinem und selbst bei kurzwelligem Licht hochtransparentem Polycarbonat.

Es wurde nun überraschenderweise gefunden, daß die Lichtdurchlässigkeit des Polycarbonates in direktem Zusammenhang mit der letzten Herstellungsstufe - der Entfernung und Verdampfung des Lösungsmittels - sowie der Weiterverarbeitung steht. Insbesondere wurde gefunden, dass die Temperatur in diesen Verfahrensschritten von entscheidender Bedeutung für die Eigenschaft des Polycarbonates bezüglich der Lichtdurchlässigkeit bei kurzen Wellenlängen ist.

Gegenstand der Anmeldung ist daher ein Verfahren zur Herstellung und Weiterverarbeitung von Polycarbonat auf Basis von 1,1-Bis-(4-hydroxyphenyl)-3,3,5-trimethylcyclohexanon sowie 4,4-(meta-Phenylendiisopropyl)-diphenol mit einer Transmission von mehr als 86 % nach ASTM E 313 bei einer Wellenlänge von 400 nm, dadurch gekennzeichnet, dass die Aufarbeitung (Entfernung und Verdampfung des Lösungsmittels)und Weiterverarbeitung des Polycarbonates bei Temperaturen von nicht mehr als 290°C, bevorzugt von nicht mehr als 285°C, ganz besonders bevorzugt bei Temperaturen von 240 bis insbesondere nicht mehr als 280°C durchgeführt wird.

Die Herstellung des Polycarbonats kann nach allgemein bekannten Methoden erfolgen. Bevorzugt wird das Polycarbonat nach dem Phasengrenzflächenverfahren hergestellt wobei in der Abtrennungstufe des Lösungsmittels sowie in gegebenenfalls anschließenden Verarbeitungsstufen die erfindungsgemäßen Temperaturen nicht überschritten werden sollten.

In einer bevorzugten Ausführungsform wird direkt nach der Polycarbonatherstellungsreaktion die Reaktionsmischung filtriert und/oder die erhaltene und abgetrennte organische Polycarbonat-Phase filtriert und gegebenenfalls gewaschen und/oder die von der Waschflüssigkeit abgetrennte organische Polycarbonat-Phase gegebenenfalls heiß filtriert.

Vorzugsweise werden mindesten zwei dieser Filtrationen, insbesondere alle drei Filtrationen durchgeführt.

In einer bevorzugten Variante wird, insbesondere bei der Heißfiltration, mindestens einmal, bevorzugt zweimal, besonders bevorzugt mindestens dreimal, insbesondere stufenweise filtriert. Bei der stufenweise Filtration beginnt man mit groberen Filtern, um dann zu feineren Filtern zu wechseln. Bevorzugt ist, daß man die Filtration der zweiphasigen Medien in Verfahrensschritt mit gröberen Filtern durchführt.

Im Verfahrensschritt werden für die Heißfiltration Filter mit kleiner Porengröße eingesetzt. Hierfür ist wichtig, daß die Polycarbonat-Phase als möglichst homogene Lösung vorliegt. Dies wird durch Erwärmen der, im allgemeinen noch Reste von wäßriger Waschflüssigkeit enthaltenden, organischen Polycarbonat-Phase erreicht. Dabei wird die Waschflüssigkeit im organischen Lösungsmittel gelöst und eine klare Lösung entsteht. Die zuvor gelösten Verunreinigungen, insbesondere die gelösten Alkalisalze, fallen aus und können abfiltriert werden.

Zur Erreichung einer homogenen Lösung kann neben dem oben beschrieben Verfahren auch das bekannte Ausfrier-Verfahren eingesetzt werden.

Zur Durchführung der erfindungsgemäßen Filtration werden Membranfilter und Sintermetallfilter oder auch Beutelfilter als Filtereingesetzt. Die Porengröße der Filter betragen in der Regel 0,05 bis 5 µm, vorzugsweise 0,05 bis 1,5 µm, bevorzugt etwa 0,2 µm, 0,6 µm oder etwa 1,0 µm. Solche Filter sind im Handel beispielsweise von den Firmen Pall GmbH, D-63363 Dreieich, und Krebsböge GmbH, D-42477 Radevormwald, (Typ SIKA-R CU1AS) erhältlich.

In dem Verfahren verwendete inerte organische Lösungsmittel sind beispielsweise Dichlormethan, die verschiedenen Dichlorethane und Chlorpropanverbindungen, Chlorbenzol und Chlortoluol, vorzugsweise werden Dichlormethan und Gemische aus Dichlormethan und Chlorbenzol eingesetzt.

Die Reaktion kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet. Als Kettenabbruchmittel und Molmassenregler können ein monofunktionelles Phenol, wie Phenol, Cumylphenol, p.-tert.-Butylphenol oder 4-(1,1,3,3-Tetramethylbutyl)phenol verwendet werden. Als Verzweiger kann beispielsweise Isatinbiskresol eingesetzt werden.

Zur Herstellung der hochreinen Polycarbonate werden die Bisphenole in wäßriger alkalischer Phase, vorzugsweise Natronlauge, gelöst. Die gegebenenfalls zur Herstellung von Copolycarbonaten erforderlichen Kettenabbrecher werden in Mengen von 1,0 bis 20,0 Mol % je Mol Bisphenol, in der wäßrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt.

Als Bisphenole werden 1,1-Bis-(4-hydroxyphenyl)-3,3,5-trimethylcyclohexanon sowie sowie 4,4-(meta-Phenylendüsopropyl)-diphenol (Bisphenol M) gegebenenfalls deren Gemische eingesetzt, wobei das 1,1-Bis-(4-hydroxyphenyl)-3,3,5-trimethylcyclohexanon immer in Mengen > 0,1 Mol% anwesend ist. Bevorzugte 1,1-Bis-(4-hydroxyphenyl)-3,3,5-trimethylcyclohexanonkonzentrationen liegen bei 40 bis 60 mol-%. Die erfindungsgemäß einzusetzenden Bisphenolverbindungen werden mit Kohlensäureverbindungen, insbesondere Phosgen, umgesetzt.

Gegebenenfalls einzusetzende Kettenabbrecher sind sowohl Monophenole als auch Monocarbonsäuren. Geeignete Monophenole sind Phenol selbst, Alkylphenole wie Kresole, p-tert.-Butylphenol, p-Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol sowie deren Mischungen.

Geeignete Monocarbonsäuren sind Benzoesäure, Alkylbenzoesäuren und Halogenbenzoesäuren.

Bevorzugte Kettenabbrecher sind die Phenole der Formel (I) 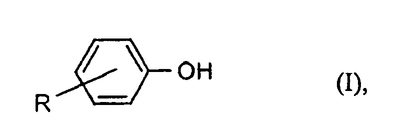
worin
- R: Wasserstoff, tert.-Butyl oder ein verzweigter oder unverzweigter C₈- und/oder C₉-Alkylrest ist.

Bevorzugter Kettenabbrecher ist Phenol und p-tert.-Butylphenol.

Die Menge an einzusetzendem Kettenabbrecher beträgt 0,1 Mol-% bis 5 Mol-%, bezogen auf Mole an jeweils eingesetzten Diphenolen. Die Zugabe der Kettenabbrecher kann vor, während oder nach der Phosgenierung erfolgen.

Gegebenenfalls kann der Reation noch Verzweiger zugesetzt werden. Bevorzugte Verzweiger sind die in der Polycarbonatchemie bekannten tri- oder mehr als trifunktionellen Verbindungen, insbesondere solche mit drei oder mehr als drei phenolischen OH-Gruppen.

Verzweiger sind beispielhaft und vorzugsweise auch Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methylbenzyl)-4-methylphenol, 2-(4-Hydroxyphenyl)-2-(2,4-dihydroxyphenyl)-propan, Hexa-(4-(4-hydroxyphenyl-isopropyl)-phenyl)-orthoterephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydro-indol.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wäßrig alkalischen Phase vorgelegt werden, oder in einem organischen Lösungsmittel gelöst vor der Phosgenierung zugegeben werden.

Die erfindungsgemäßen Polycarbonate sind Copolycarbonate und deren Gemische. Der Begriff Polycarbonat steht stellvertretend für die nach den erfindungsgemäßen Verfahren erhältlichen Polycarbonat-Substrate.

Die erfindungsgemäßen Polycarbonate haben mittlere Molekulargewichte M_{w} (ermittelt durch Gelpermeationschromatografie nach vorhergehender Eichung) von 10 000 bis 30 000, vorzugsweise von 12 000 bis 25 000.

Das nach dem erfindungsgemäßen Verfahren hergestellte Polycarbonat ist bei einer Wellenlänge von 400 nm mit einer Transmission von mehr als 86%, insbesondere mehr als 88 % nach ASTM E 313 (Standard Practice for Calculating Yellowness and Whiteness Indices from Instrumentally Measured Color Coordinates, American Society for testing and Materials 100 Barr Harbor Dr., West Conehohochen, PA 19428; Designation E 313-98), gekennzeichnet.

Das nach dem erfindungsgemäßen Verfahren erhältliche Polycarbonat hat eine hohe Reinheit und eine besonders hohe Transmission bei Bestrahlung mit blauem Laserlicht.

Gegenstand der Anmeldung sind ebenfalls optische Datenträger die im wesentlichen aus Polycarbonat auf Basis von 1,1-Bis-(4-hydroxyphenyl)-3,3,5-trimethylcyclohexanon sowie 4,4-(meta-Phenylendiisopropyl)-diphenol das bei einer Wellenlänge von 400 nm mit einer Transmission von mehr als 86%, insbesondere mehr als 88 % nach ASTM E 313 gekennzeichnet, hergestellt werden. Erfindungsgemäße optische Datenträger sind insbesondere solche, die ausgelesen, einmal beschreibbar oder mehrfach beschreibbar sind, wobei beim Lese- bzw. Schreibvorgang ein Laserstrahl verwandt wird. Bevorzug sind optische Datenträger die zum Schreiben bzw. Lesen einen Laserstrahl im Wellenlängenbereich von 390 bis 500 nm, besonders bevorzugt von 395 bis 450 nm benutzen. Die optischen Datenträger können dabei eine Informationsschicht pro Disk, wie z.B. bei der CD-Audio, der DVD5 oder bei magnetooptischen Schreiben, wie der Minidisk besitzen, zwei Informationsschichten wie bei der DVD9, der DVD 10 besitzen oder mehr als zwei Informationschichten, wie z.B. bei der DVD18 besitzen. Hergestellt werden die optischen Datenträger nach bekannten Methoden wie z.B. durch Spritzgießen oder Spritzprägen des erfindungsgemäßen Polycarbonats.

Die nachfolgende Beispiele dienen zur Erläuterung der Erfindung. Die Erfindung ist nicht auf die Beispiele beschränkt.

### Beispiele

### Beispiel 1

Zur Herstellung der Polycarbonate werden 1,1-Bis-(4-hydroxyphenyl)-3,3,5-trimethylcyclohexanon sowie 4,4-(meta-Phenylendiisopropyl)-diphenol (Bisphenol M) in einer wäßrigen 6,5%igen NaOH unter Sauerstoffausschluß gemischt. Die eingesetzte NaOH und das VE-Wasser werden filtriert. Diese Natriumdibisphenolatlösung wird nun in die Polycarbonatreaktion mit Phosgen (in Chlorbenzol/Methylenchlorid gelöst) und t-Butylphenol als Kettenabbrecher eingesetzt. Nach der Reaktion wird die organischev Reaktionslösung filtriert und der Wäsche zugeführt. Hier wird mit 0.6%igen Salzsäure gewaschen und anschließend mit filtriertem VE-Wasser noch 5 mal nachgewaschen. Die organische Lösung wird von der wäßrigen abgetrennt und nach dem Erwärmen der organischen Lösung auf 55°C erneut filtriert. Jetzt wird das Polymer durch Abdampfen vom Lösungsmittels stufenweise befreit. Die letzte Stufe des Abdampfens des Lösungsmittels erfolgt in einem Extruder bei dem entlang des Extruders stufenweise Vakuum angelegt wird (die letzte Zone weist Hochvakuum auf) und gleichzeitig die Temperatur der Schmelze erhöht wird, so daß das Lösungsmittel abgedampft wird. Die Schmelzetemperatur des Produkts im Extruder beträgt vom Eintritt der Polycarbonatlösung 240°C bis zum Verlassen des Extruders 280°C. Anschließend wird das Polycarbonat, welches ein Mw von 19500 aufweist, dem Granulierungsprozess zugeführt.

Das so hergestellte Polycarbonat weist nach ASTM E 313 eine Transmission bei 400 nm von 87,7% auf. Die integrierte Transmission über den gesamten Wellenlängebereich liegt bei 90,3 %.

### Beispiel 2

Wie Beispiel 1, nur beträgt die Schmelzetemperatur des Produkts im Extruder vom Eintritt der Polycarbonatlösung 235°C bis zum Verlassen des Extruders 275°C.

Das so hergestellte Polycarbonat weist nach ASTM E 313 eine Transmission bei 400 nm von 87,9 % auf. Die integrierte Transmission über den gesamten Wellenlängebereich liegt bei 90,3 %.

### Vergleichsbeispiel 1

Wie Beispiel 1, nur beträgt die Schmelzetemperatur des Produkts im Extruder vom Eintritt der Polycarbonatlösung 245°C bis zum Verlassen des Extruders 295°C.

Das so hergestellte Polycarbonat weist nach ASTM E 313 eine Transmission bei 400 nm von 85,2 % auf. Die integrierte Transmission über den gesamten Wellenlängebereich liegt bei 90,0 %.

### Vergleichsbeispiel 2

Wie Beispiel 1, nur beträgt die Schmelzetemperatur des Produkts im Extruder vom Eintritt der Polycarbonatlösung 265°C bis zum Verlassen des Extruders 320°C.

Das so hergestellte Polycarbonat weist nach ASTM E 313 eine Transmission bei 400 nm von 83,2 % auf. Die integrierte Transmission über den gesamten Wellenlängebereich liegt bei 89,8 %.

## Patentansprüche

1. Verfahren zur Herstellung und Weiterverarbeitung von Polycarbonat auf Basis von 1,1-Bis-(4-hydroxyphenyl)-3,3,5-trimethylcyclohexanon sowie 4,4-(meta-Phenylendiisopropyl)-diphenol mit einer Transmission von mehr als 86 % nach ASTM E 313 bei einer Wellenlänge von 400 nm, **dadurch gekennzeichnet, dass** die Entfernung und Verdampfung des Lösungsmittels als letzte Stufe des Herstellungsprozesses des Polycarbonates und die anschließende Weiterverarbeitung bei Temperaturen unter 290°C durchgeführt wird.

2. Verfahren gemäß Anspruch 1, **dadurch gekennzeichnet, dass** die Entfernung und Verdampfung des Lösungsmittels und die anschließende Weiterverarbeitung bei Temperaturen unter 285°C durchgeführt wird.

3. Verwendung des gemäß Anspruch 1 hergestellten Polycarbonates zur Herstellung von optischen Datenträgern.

4. Optische Datenträger im wesentlichen aus dem gemäß Anspruch 1 hergestellten Polycarbonat.

## Claims

1. Method for the production and further processing of polycarbonate based on 1,1-bis(4-hydroxyphenyl)-3,3,5-trimethyl cyclohexanone and 4,4-(metaphenylene diisopropyl) diphenol with a transmission of over 86% according to ASTM E 313 with a wavelength of 400 nm, **characterised in that** removal and evaporation of the solvent as the final stage of the polycarbonate production process and subsequent further processing is performed at temperatures of below 290°C.

2. Method according to claim 1, **characterised in that** removal and evaporation of the solvent and subsequent further processing is performed at temperatures of below 285°C.

3. Use of the polycarbonate produced according to claim 1 for the manufacture of optical data carriers.

4. Optical data carriers manufactured substantially from the polycarbonate produced according to claim 1.

## Revendications

1. Procédé de fabrication et de transformation de polycarbonate à base de 1,1-bis-(4-hydroxyphényle)-3,3,5-triméthylcyclohexanone ainsi que de 4,4-(métaphénylènediisopropyle)-diphénol avec une transmission de plus de 86 % suivant ASTM E 313 pour une longueur d'onde de 400 nm, **caractérisé en ce que** l'élimination et l'évaporation du solvant sont effectués comme dernière étape du processus de fabrication du polycarbonate et que le traitement ultérieur s'effectue à des températures inférieures à 290°C.

2. Procédé suivant la revendication 1, **caractérisé en ce que** l'élimination et l'évaporation du solvant et le traitement ultérieur s'effectuent à des températures inférieures 285°C.

3. Utilisation du polycarbonate fabriqué suivant la revendication 1 pour la fabrication de supports de données optiques.

4. Supports de données optiques essentiellement en polycarbonate fabriqué suivant la revendication 1.
